# EUROPEAN PATENT APPLICATION

(11) **EP 3 489 277 A1**
(43) Date of publication of application: **29.05.2019**
(21) Application number: 17834662.3
(22) Date of filing: 06.07.2017
(51) Int. Cl.: C08G 63/90, C08G 85/00, C08J 11/02, C08G 63/08

(54) **METHOD FOR PREPARING BIODEGRADABLE POLYMER**

(30) Priority: 25.07.2016 KR 20160094321
(71) Applicant: Samyang Biopharmaceuticals Corporation, Seoul 03129 (KR)
(72) Inventor: LEE, Na Young, Daejeon 35379 (KR); KOH, Young Joo, Daejeon 35245 (KR); YEO, Guw Dong, Daejeon 34048 (KR)
(74) Representative: Clarenbach, Carl-Philipp
(86) International application number: PCT/KR2017/007232
(87) International publication number: WO 2018/021719

(57) **Abstract**

The present disclosure relates to a process for obtaining an ultrapure polymer by simply and effectively removing unreacted residual monomer in polymer, which is generated during production of a biodegradable polymer such as polylactic acid or derivatives thereof.

## Description

### [TECHNICAL FIELD]

The present disclosure relates to a process for obtaining an ultrapure polymer by simply and effectively removing unreacted residual monomer in polymer, which is generated during production of a biodegradable polymer such as polylactic acid or derivatives thereof. In particular, the present disclosure relates to a method for obtaining an ultrapure biodegradable polymer without degeneration its polymeric properties, by contacting the biodegradable polymer in a solid state with an organic solvent containing a secondary alcohol or tertiary alcohol to dissolve the residual monomer to remove it from the solid polymer by solid-liquid extraction.

### [BACKGROUND ART]

Biodegradable polymers such as polylactic acid and its derivatives comprising poly-L-lactic acid (PLLA), poly-D-lactic acid (PDLA), poly-D,L-lactic acid (PDLLA), poly(L-lactide-co-D,L-lactide) (PLDLLA), polyglycolic acid (PGA), poly(L-lactic-co-glycolic acid) (PLLGA) and poly(D,L-lactic-co-glycolic acid) (PDLLGA), etc. are widely used in various fields like drug delivery and medical devices due to their excellent biocompatibility and their characteristic of being decomposed into lactic acid or glycolic acid that is harmless to the human body.

Among these biodegradable polymers, especially biodegradable polymers for medical use, synthetic polymers that have been most actively studied and used are polyesters having a unit of alpha-hydroxyl acid. Among them, polyesters having a unit of lactic acid and/or glycolic acid are best known. These polymers are generally synthesized by ring-opening polymerization of glycolide or lactide, which is cyclic dimer obtained by decompression and heat-decomposition of oligomers generated by dehydrative condensation of monomers under heating. As a catalyst for polymerization, an ester compound of divalent tin such as tin-2-ethylhexanoate is used. As an initiator, an alcohol such as lauryl alcohol is used. The obtained polymer mass is then subjected to an additional process such as cutting, grinding or pelletizing to form a polymer chip or pellet.

The unreacted monomers remaining in the polymer obtained by the above-described polymerization process are rapidly hydrolyzed, and the hydrolysis product thereof accelerates the decomposition of the polymer. Or, it was reported that the physical properties of the polymer are changed according to the content of the residual monomer because the material generated by the hydrolysis of the monomer gives plasticity to the polymer, and thereby lowers the glass transition temperature (Tg) or melting temperature (Tm) of the polymer.

Therefore, in order to stably maintain the physical properties of the polymer, it is necessary to remove the remaining unreacted monomers. Generally, the residual monomer is removed by a method of heating and vacuum drying. The final content of the residual monomer in the polymer is preferably 0.5 wt% or less. However, during the process for removing monomers by vacuum drying, the monomers are hydrolyzed due to a small amount of water in the polymer. This leads to the decomposition of the polymer, which may be why the change in the physical properties of the polymer is observed after drying.

In US Patent No. 5,319,038, a solid-liquid extraction method using acetone was employed in an attempt to remove residual monomer from high molecular weight PLLA, and it is stated that the monomer can be removed without changing the physical properties of the polymer. However, such a method can be applied only to polymers like PLLA which has high molecular weight and high crystallinity and cannot be applied to polymers like PDLLA, PLDLLA and PLGA because they are amorphous polymers and thus are dissolved in acetone.

Korean Patent No. 10-1119861 discloses a method comprising dissolving a polymer in an organic solvent, adding an alkali metal salt aqueous solution thereto to remove monomers by transferring them to aqueous fraction by liquid-liquid extraction, and then reprecipitating an organic fraction containing polymers to obtain the polymer. However, this method has a disadvantage because the monomer is removed after once dissolving the polymer, and after which the polymer must be re-precipitated.

### [CONTENTS OF THE INVENTION]

### [PROBLEMS TO BE SOLVED]

The purpose of the present disclosure is to obtain an ultrapure biodegradable polymer by dissolving the unreacted monomer included in the polymer solely to an organic solvent without dissolving not only the crystalline biodegradable polymer PLLA, but also amorphous polymers such as PDLLA, PLDLLA and PLLGA; and removing the residual monomer by a solid-liquid extraction method.

### [TECHNICAL MEANS TO SOLVE THE PROBLEMS]

One aspect of the present disclosure provides a method for purifying a biodegradable polymer, comprising (1) a step of contacting a biodegradable polymer in a solid state with a secondary alcohol, a tertiary alcohol or a mixture thereof to extract a residual monomer from the polymer by solid-liquid extraction; and (2) a step of removing the monomer extracted from the polymer.

Another aspect of the present disclosure provides a biodegradable polymer which is purified or prepared according to the above method, wherein the content of the residual monomer is 0.5% (w/w) or less when measured by ¹H NMR.

### [EFFECTS OF THE INVENTION]

In accordance with the present disclosure, it is possible to produce an ultrapure crystalline or amorphous biodegradable polymer (for example, polylactic acid or derivatives thereof) by simply and effectively removing the unreacted monomer remaining in the polymer without degeneration in properties of the polymer.

### [BRIEF EXPLANATION OF THE DRAWING]

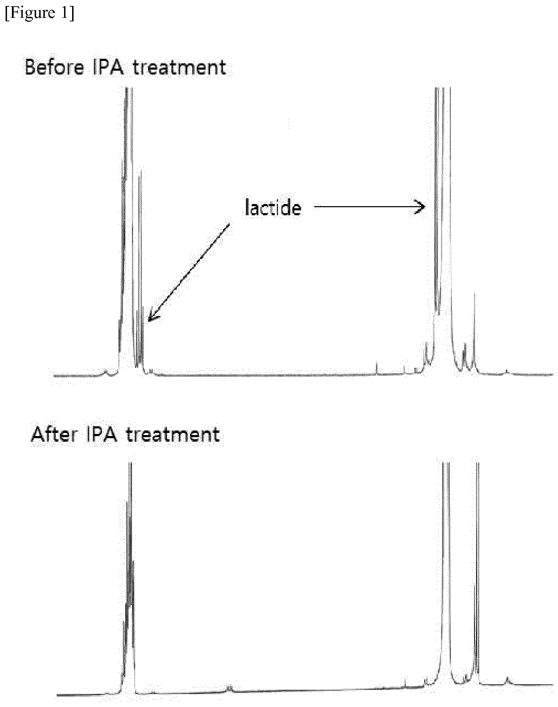

Figure 1 is a proton nuclear magnetic resonance spectrum (¹H NMR) measured before (upper) and after (lower) the treatment of poly-D,L-lactide (PDLLA) with isopropanol (IPA) in Example 3.

### [DETAILED DESCRIPTION TO CARRY OUT THE INVENTION]

The present disclosure is explained in more detail below.

Throughout the present specification, the term "biodegradable polymer" means a polymer having excellent biocompatibility and decomposing into a harmless component such as lactic acid or glycolic acid.

In an embodiment of the present disclosure, the biodegradable polymer may be an aliphatic polyester having a unit of alpha-hydroxyl acid, in particular, having a unit of lactic acid and/or glycolic acid.

In an embodiment of the present disclosure, the biodegradable polymer may be a polyglycolic acid (PGA), polylactic acid (PLA), or poly(lactic-co-glycolic acid) (PLGA).

In an embodiment of the present disclosure, the biodegradable polymer may be a polylactic acid or a derivative thereof.

In an embodiment of the present disclosure, the polylactic acid derivative may be, for example, at least one selected from the group consisting of polyglycolide, polymandelic acid, polycaprolactone, polydioxan-2-one, polyamino acid, polyorthoesters, polyanhydrides and copolymers thereof. More specifically, the polylactic acid derivative is polylactide, polyglycolide, polycaprolactone or polydioxan-2-one.

In an embodiment of the present disclosure, the biodegradable polymer may be selected from the group consisting of poly-L-lactic acid (PLLA), poly-D-lactic acid (PDLA), poly-D,L-lactic acid (PDLLA), poly(L-lactide-co-D,L-lactide) (PLDLLA), polyglycolic acid (PGA), poly(L-lactic-co-glycolic acid) (PLLGA), poly(D,L-lactic-co-glycolic acid) (PDLLGA) and combinations thereof.

In an embodiment of the present disclosure, the biodegradable polymer may be selected from the group consisting of polylactic acid, a copolymer of lactic acid and glycolic acid, a copolymer of lactic acid and caprolactone, a copolymer of lactic acid and 1,4-dioxan-2-one, and combinations thereof.

The term "a polylactic acid" or "a polylactic acid derivative" is a concept collectively referred to as a polylactic acid and polylactic acid derivatives, unless the context clearly indicates otherwise. There is no difference in purification method between the polylactic acid and the polylactic acid derivative.

In an embodiment of the present disclosure, the number average weight of the biodegradable polymer may be, for example, 1,000 to 500,000 dalton, and more specifically 10,000 to 300,000 dalton, but it may not be limited thereto. The purification method according to the present disclosure can be applied not only to a biodegradable polymer having low molecular weight (for example, polylactic acid or its derivatives) but also a biodegradable polymer having high molecular weight.

In the present disclosure, a residual monomer is removed from the polymer by solid-liquid extraction, by contacting the biodegradable polymer in a solid state with a secondary alcohol, a tertiary alcohol or a mixture thereof.

In the present disclosure, the residual monomer is removed by solid-liquid extraction without dissolving the biodegradable polymer comprising most polylactic acids and derivatives thereof, including crystalline polymers such as PLLA, amorphous polymers such as PDLLA, PLDLLA and PLGA, polymers having low molecular weight and polymers having high molecular weight.

Amorphous polymers tend to be soluble in most aprotic solvents due to their weak resistance to organic solvents. Therefore, alcohols which are protic solvents are considered as the solvent which does not dissolve the amorphous polymer. However, if the polymer is exposed to alcohols with remaining unreacted monomer, the ring-opening of the cyclic monomer by the hydroxyl group of the alcohol occurs and the resultant product promotes the decomposition of the polymer. This is in accordance with the same mechanism as mentioned above that the physical properties of the polymer are degraded by moisture.

Therefore, in the present disclosure, in order to suppress the decomposition of the polymer caused by the hydrolysis of the monomer during removal of the monomer, a secondary alcohol (an alcohol compound in which a hydroxyl group is attached to a secondary carbon), a tertiary alcohol (an alcohol compound in which a hydroxyl group is attached to a tertiary carbon) or a mixture thereof, which does not easily react with the residual monomer, is used. The secondary and tertiary alcohols are contemplated to inhibit the decomposition of the polymer during the monomer-removal process because it is difficult to cause the ring opening reaction of the lactide monomer due to the steric hindrance effect as compared with the primary alcohol.

In an embodiment of the present disclosure, the secondary or tertiary alcohol may be a linear or branched aliphatic secondary alcohol or tertiary alcohol having at least 3 (for example, 3 to 10, or 3 to 6, or 3 to 5) carbon atoms.

In an embodiment of the present disclosure, the secondary alcohol may be selected from the group consisting of isopropanol (IPA, also referred to as isopropyl alcohol), 2-butanol, 3-pentanol and mixtures thereof, and more specifically isopropanol.

In an embodiment of the present disclosure, the tertiary alcohol may be selected from the group consisting of tert-butanol, tert-amyl alcohol and mixtures thereof, and more specifically tert-butanol.

The solid-liquid extraction method used in the present disclosure means a method of removing the impurities from the subject in a solid state, by mixing and contacting a subject in a solid state (i.e., a biodegradable polymer in a solid state) with an extracting solvent (i.e., a secondary or tertiary alcohol) which does not dissolve the subject but dissolves impurities (i.e., residual monomer) to be removed therefrom; and recovering the solid component by leaving the impurities in the extracting solvent through filtration.

In an embodiment of the present disclosure, the mixing ratio of the secondary or tertiary alcohol : the biodegradable polymer may be from 1:1 to 1:100 (w/v), more specifically from 1:2 to 1:10 (w/v).

In an embodiment of the present disclosure, the time for extracting the unreacted monomer remaining in the biodegradable polymer with a secondary or tertiary alcohol may be from 0.5 to 24 hours, and more specifically from 4 to 12 hours.

In an embodiment of the present disclosure, the temperature at the time of extracting the unreacted monomer remaining in the biodegradable polymer with a secondary or tertiary alcohol may be from 0 to 90°C, more specifically from 25 to 60°C.

In an embodiment of the present disclosure, the step of extracting the unreacted monomer remaining in the biodegradable polymer with a secondary or tertiary alcohol may be repeated at least once but less than 20 times, more specifically, from twice to five times. Washing and filtration for separating the polymer from the extracting solvent are carried out each time. The solid polymer chip or pellet obtained after filtration is vacuum-dried in an oven to remove the remaining solvent. The temperature of the oven during the vacuum drying may be 20 to 120°C, more specifically 40 to 90°C. The drying time may be at least 1 day, more specifically 2 to 10 days.

Accordingly, the methods for purifying and preparing a biodegradable polymer according to the present disclosure may further comprise a step of collecting the polymer in a solid state by filtering the resultant mixture obtained by performing the solid-liquid extraction method, and a step of vacuum drying the collected polymer.

When the biodegradable polymer is purified or prepared according to the present disclosure, an ultrapure biodegradable polymer in which no residual monomer is detected when measured by ¹H NMR (i.e., residual monomer content is N.D. (not detected)) can be obtained. Therefore, according to another aspect of the present disclosure, a biodegradable polymer which is purified or prepared according to the above method, wherein the content of the residual monomer is 0.5% (w/w) or less when measured by ¹H NMR, is provided.

The present invention is explained in more detail by the following examples. However, these examples seek to illustrate the present invention only, and the scope of the present invention is not limited by the examples in any manner.

### [EXAMPLES]

In order to confirm the effectiveness of the methods for removing the monomer by vacuum drying and for removing the monomer by solid-liquid extraction using a primary alcohol, the following Comparative Examples 1 to 4 were carried out.

### Comparative Example 1: Removal of the residual monomer from PLLA by vacuum drying

1 kg of PLLA was placed in a stainless steel tray, and the tray was introduced into an oven. The temperature of the oven was set at 20°C, and the sample was vacuum-dried for about 1 hour. Then, the temperature of the oven was raised to 40°C and the sample was dried for 4 to 12 hours. After that, the temperature of the oven was finally raised to 90°C and the sample was dried for 10 days. After the removal of the monomer by vacuum drying was completed, the sample was removed from the oven and measured for ¹H NMR and IV (inherent viscosity). IV measurement was carried out in a chloroform (CHCl₃) solvent at 25°C and c = 0.1 g/dL using a Ubelohde viscosity tube. The change of the content of the residual monomer measured by ¹H NMR and the result of the measurement of IV are shown in Table 1 below.

### Comparative Example 2: Removal of the residual monomer from PDLLA by vacuum drying

1 kg of PDLLA was placed in a stainless steel tray, and the tray was introduced into an oven. The temperature of the oven was set at 20°C, and the sample was vacuum dried for about 1 hour. Then, the temperature of the oven was raised to 40°C and the sample was dried for 4 to 12 hours. After that, the temperature of the oven was finally raised to 80°C and the sample was dried for 10 days. After the removal of the monomer by vacuum drying was completed, the sample was removed from the oven and measured for ¹H NMR and IV. The change of the content of the residual monomer measured by ¹H NMR and the result of the measurement of IV are shown in Table 1 below.

### Comparative Example 3: Removal of the residual monomer from PLLA by using methanol

10 g of PLLA chip was placed in a flask, and 20 ml of anhydrous methanol was added thereto. The obtained mixed solution was stirred or left at room temperature for about 4 hours. The methanol was then discarded and replaced with fresh methanol. This process was carried out four times in total, and then the methanol was removed by filtration, and the obtained PLLA chip was dried in an oven. The drying temperature was 40°C, and the drying time was 4 to 12 hours. After the drying of methanol was completed, the sample was removed from the oven and subjected to ¹H NMR and IV measurements. The change of the content of the residual monomer measured by ¹H NMR and the result of the measurement of IV are shown in Table 1 below.

### Comparative Example 4: Removal of the residual monomer from PDLLA by using ethanol

10 g of PDLLA chip was placed in a flask, and 20 ml of anhydrous ethanol was added thereto. The obtained mixed solution was stirred or left at room temperature for about 4 hours. The ethanol was then discarded and replaced with fresh ethanol. This process was carried out four times in total, and then the ethanol was removed by filtration and the obtained PDLLA chip was dried in an oven. The drying temperature was 40°C, and the drying time was 4 to 12 hours. After the drying of ethanol was completed, the sample was removed from the oven and subjected to ¹H NMR and IV measurements. The change of the content of the residual monomer measured by ¹H NMR and the result of the measurement of IV are shown in Table 1 below.

**[Table 1] Results from the experiments of Comparative Examples 1 to 4**

| Sample | Content of lactide (wt%) | | IV (dl/g) | | Change in IV |
|---|---|---|---|---|---|
| | Before treatment | After treatment | Before treatment | After treatment | |
| Comparative Example 1 | 4.12 | 0.38 | 5.84 | 4.96 | -15% |
| Comparative Example 2 | 9.13 | 1.73 | 2.02 | 1.83 | -9.4% |
| Comparative Example 3 | 1.31 | 0.88 | 1.98 | 1.85 | -6.7% |
| Comparative Example 4 | 9.13 | 1.25 | 2.02 | 1.58 | -22% |

As shown in Table 1, the PLLA sample (Comparative Example 1) in which the monomer was removed by vacuum drying still contains the monomer. It was also observed that IV was decreased by 15% as compared with before drying. Similar results were obtained in Comparative Example 2. That is, the monomer still remained after the vacuum drying and a decrease in IV was observed.

It is noteworthy that in Comparative Example 3 in which the removal of monomer by the solid-liquid extraction using methanol was attempted, IV was decreased after methanol treatment. A decrease in IV was similarly observed in the case of Comparative Example 4 in which the solid-liquid extraction using ethanol was carried out. It is presumed that such results are due to the ring-opening reaction of the monomer by the primary alcohol and subsequent degradation of the polymer.

Next, removal of the monomer was carried out using secondary or tertiary alcohol as described in Examples 1 to 3 below.

### Example 1: Removal of the residual monomer from PLDLLA 70/30 by using isopropanol

10 g of PLDLLA 70/30 (molar ratio of L-lactide : D, L-lactide = 70:30) was taken and put into a flask, and 100 ml of isopropyl alcohol was added thereto and stirred. The internal temperature during stirring was set at 60°C. After stirring for about 1 to 4 hours, the isopropanol was removed by filtration and replaced with the same amount of fresh isopropanol. This process was carried out four times in total. Finally, the PLDLLA 70/30 chip obtained through filtration was dried by vacuum drying to remove the remaining solvent. To remove isopropanol, the temperature of the oven was set at 40 to 80°C. After the isopropanol was completely dried, the sample was removed from the oven and subjected to ¹H NMR and IV measurements. The change of the content of the residual monomer measured by ¹H NMR and the result of the measurement of IV are shown in Table 2 below.

### Example 2: Removal of the residual monomer from PDLLA by using tert-butanol

10 g of PDLLA was taken and put into a flask, and 100 ml of tert-butanol was added thereto and stirred. The internal temperature during stirring was set at 40°C. After stirring for about 1 to 4 hours, the tert-butanol was removed by filtration and replaced with the same amount of fresh tert-butanol. This process was carried out four times in total. Finally, the PDLLA chip obtained through filtration was dried by vacuum drying to remove the remaining solvent. To remove tert-butanol, the temperature of the oven was set at 40 to 80°C. After the tert-butanol was completely dried, the sample was removed from the oven and subjected to ¹H NMR and IV measurements. The change of the content of the residual monomer measured by ¹H NMR and the result of the measurement of IV are shown in Table 2 below.

### Example 3: Removal of the residual monomer from PDLLA by using isopropanol

10 g of PDLLA was taken and put into a flask, and 100 ml of isopropanol was added thereto and stirred. The internal temperature during stirring was set at 50°C. After stirring for about 1 to 4 hours, the isopropanol was removed by filtration and replaced with the same amount of fresh isopropanol. This process was carried out four times in total. Finally, the PDLLA chip obtained through filtration was dried by vacuum drying to remove the remaining solvent. To remove isopropanol, the temperature of the oven was set at 40 to 80°C. After the isopropanol was completely dried, the sample was removed from the oven and subjected to ¹H NMR and IV measurements. The change of the content of the residual monomer measured by ¹H NMR and the result of the measurement of IV are shown in Table 2 below. In addition, ¹H NMR spectra before and after removing the monomer are provided in Figure 1.

**[Table 2] Results from the experiments of Examples 1 to 3**

| Sample | Content of lactide (wt%) | | IV (dl/g) | | Change in IV |
|---|---|---|---|---|---|
| | Before treatment | After treatment | Before treatment | After treatment | |
| Example 1 | 5.90 | N.D. | 4.72 | 4.82 | +2.1% |
| Example 2 | 7.80 | 2.01 | 2.28 | 2.30 | +0.9% |
| Example 3 | 7.80 | 0.15 | 2.28 | 2.31 | +1.3% |

As shown in Table 2, when the monomer was removed by solid-liquid extraction using the secondary or tertiary alcohol as in Examples 1 to 3, no degeneration in properties such as IV decrease was observed. In particular, it was confirmed that the residual monomer could be completely removed when the extraction was carried out by heating to 60°C using IPA as in Example 1. Therefore, it was confirmed that the method for removing the monomer by solid-liquid extraction using the secondary or tertiary alcohol is effective.

## Claims

1. A method for purifying a biodegradable polymer, comprising
(1) a step of contacting a biodegradable polymer in a solid state with a secondary alcohol, a tertiary alcohol or a mixture thereof to extract a residual monomer from the polymer by solid-liquid extraction; and
(2) a step of removing the monomer extracted from the polymer.

2. The method for purifying a biodegradable polymer according to Claim 1, wherein the biodegradable polymer is an aliphatic polyester having a unit of alpha-hydroxyl acid.

3. The method for purifying a biodegradable polymer according to Claim 2, wherein the biodegradable polymer is a polyglycolic acid, polylactic acid or poly(lactic-co-glycolic acid).

4. The method for purifying a biodegradable polymer according to Claim 3, wherein the biodegradable polymer is selected from the group consisting of poly-L-lactic acid (PLLA), poly-D-lactic acid (PDLA), poly-D,L-lactic acid (PDLLA), poly(L-lactide-co-D,L-lactide) (PLDLLA), polyglycolic acid (PGA), poly(L-lactic-co-glycolic acid) (PLLGA), poly(D,L-lactic-co-glycolic acid) (PDLLGA) and combinations thereof.

5. The method for purifying a biodegradable polymer according to any one of Claims 1 to 4, wherein the secondary alcohol or tertiary alcohol is a linear or branched aliphatic secondary alcohol or tertiary alcohol having 3 to 5 carbon atoms.

6. The method for purifying a biodegradable polymer according to Claim 5, wherein the secondary alcohol is selected from the group consisting of isopropanol, 2-butanol, 3-pentanol and mixtures thereof, or the tertiary alcohol is selected from the group consisting of tert-butanol, tert-amyl alcohol and mixtures thereof.
